# EUROPEAN PATENT APPLICATION

(11) **EP 4 851 867 A1**
(43) Date of publication of application: **09.12.2026**
(21) Application number: 25748389.1
(22) Date of filing: 20.01.2025
(51) Int. Cl.: G06N 3/096, G06N 20/00, G06T 7/00

(54) **INFORMATION PROCESSING DEVICE AND INFORMATION PROCESSING METHOD**

(30) Priority: 01.02.2024 JP 2024014423
(71) Applicant: Sony Group Corporation, Tokyo 108-0075 (JP)
(72) Inventor: Iwaki, Kazunori, 108-0075 Tokyo (JP); Suzuki, Kenji, 108-0075 Tokyo (JP)
(74) Representative: 2SPL Patentanwälte PartG mbB
(86) International application number: PCT/JP2025/001517
(87) International publication number: WO 2025/164393

(57) **Abstract**

An information processing device according to the present disclosure includes a machine learning model obtained by incorporating parameters for performing inference, the information processing device being configured to incorporate, into the machine learning model, other parameters estimated by another machine learning model on the basis of training data to be invalidated with respect to a training dataset including training data used for training the machine learning model.

## Description

### Technical Field

The present disclosure relates to an information processing device and an information processing method.

### Background Art

In inference processing using an artificial intelligence (AI) model, the accuracy of inference can be improved by training the AI model by using a training dataset including a greater amount of training data.

On the other hand, in inference based on a trained AI model, there may be a case in which reflecting a portion of the training data, for example, into the inference result is not preferred.

As an example, in an AI model applied to a camera and configured to perform face recognition to achieve focus on a face, an object (such as a stuffed animal) included in the background of the face may be incorrectly recognized as a face, resulting in a state in which the intended face is not in focus. As another example, there may be a case in which a rights holder of, for example, a portion of the training data (image data, for example) included in the training dataset for training the AI model does not permit use of the image data as training data.

### Citation List

### Patent Literature

PTL 1: JP 2022-057202 A

### Non Patent Literature

NPL 1: Rohit Gandikota, et al., "Erasing concepts from diffusion models", [online], Jun. 21, 2023, arXiv preprint arXiv: 2303.07345 (2023), [retrieved Sep. 28, 2023], Internet, <https://arxiv.org/abs/2303.07345>

### Summary

### Technical Problem

In the related art, in a case in which reflecting a portion of the training data, for example, into the inference result is deemed not preferred, it is necessary to delete the training data from the training dataset and retrain the AI model. In particular, in the case of an AI model trained by using a training dataset including a vast amount of training data, retraining incurs enormous costs.

Accordingly, an object of the present disclosure is to provide an information processing device and an information processing method capable of readily realizing, by an AI model, inference processing in which specific training data is invalidated.

### Solution to Problem

An information processing device according to the present disclosure includes a machine learning model obtained by incorporating parameters for performing inference, the information processing device being configured to incorporate, into the machine learning model, other parameters estimated by another machine learning model on the basis of training data to be invalidated with respect to a training dataset including training data used for training the machine learning model.

### Brief Description of Drawings

[Fig. 1]

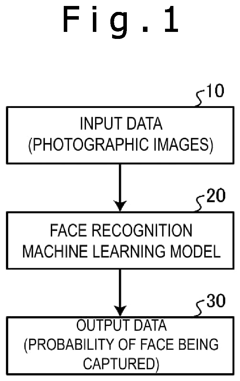

   Fig. 1 is a schematic diagram for schematically describing an application example of a model according to existing technology.
[Fig. 2]

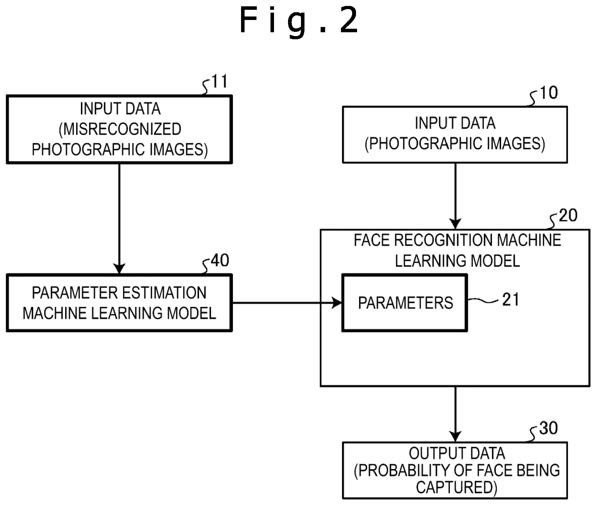

   Fig. 2 is a schematic diagram for schematically describing an application example of a model according to a first embodiment.
[Fig. 3]

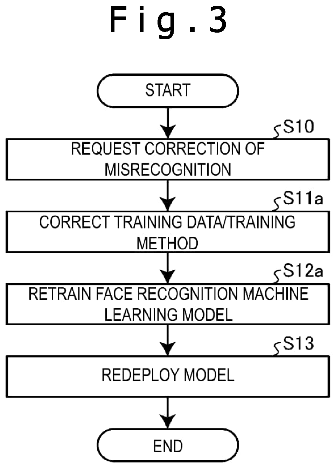

   Fig. 3 is an example of a flowchart depicting redeployment processing of the model according to the existing technology.
[Fig. 4]

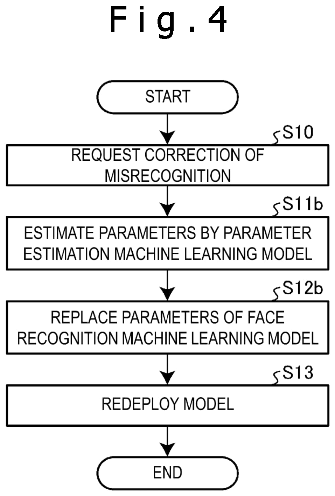

   Fig. 4 is an example of a flowchart depicting redeployment processing of the model according to the first embodiment.
[Fig. 5]

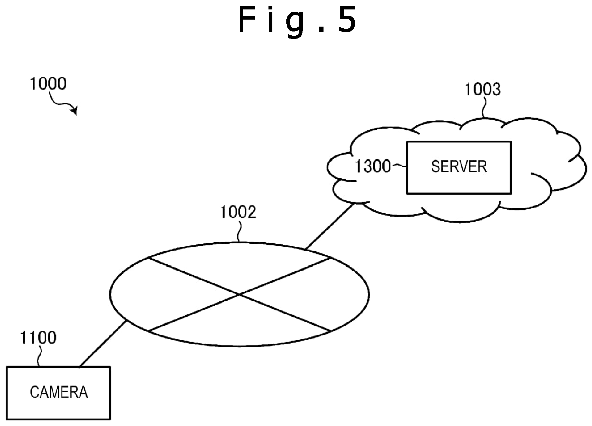

   Fig. 5 is a schematic diagram depicting a configuration of an example of an information processing system applicable to the first embodiment.
[Fig. 6]

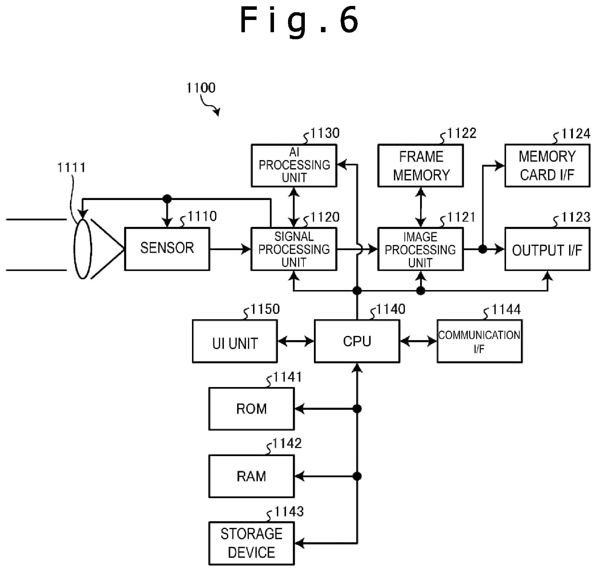

   Fig. 6 is a block diagram depicting a configuration of an example of a camera applicable to the first embodiment.
[Fig. 7]

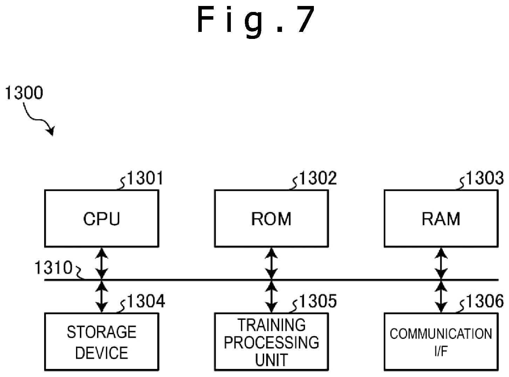

   Fig. 7 is a block diagram depicting a configuration of an example of a server applicable to the first embodiment.
[Fig. 8]

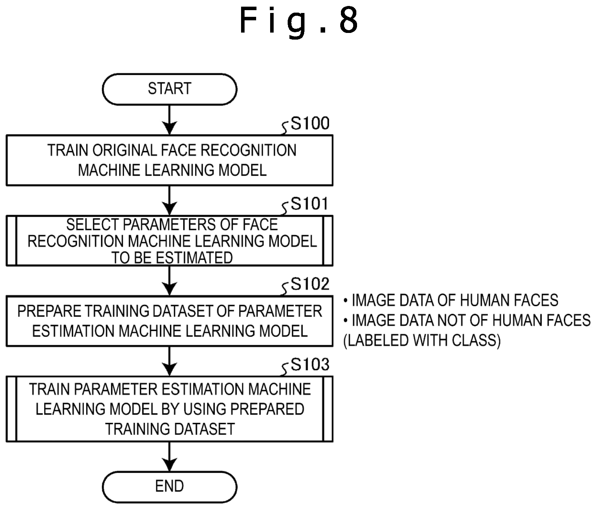

   Fig. 8 is an example of a flowchart depicting a procedure for training a parameter estimation machine learning model according to the first embodiment.
[Fig. 9A]

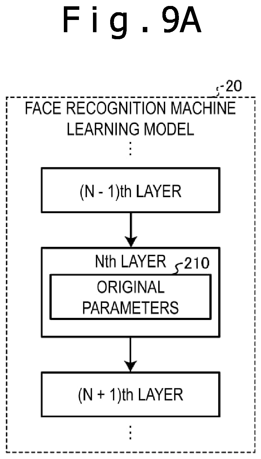

   Fig. 9A is a schematic diagram schematically depicting a configuration of a face recognition machine learning model before parameter replacement, applicable to the first embodiment.
[Fig. 9B]

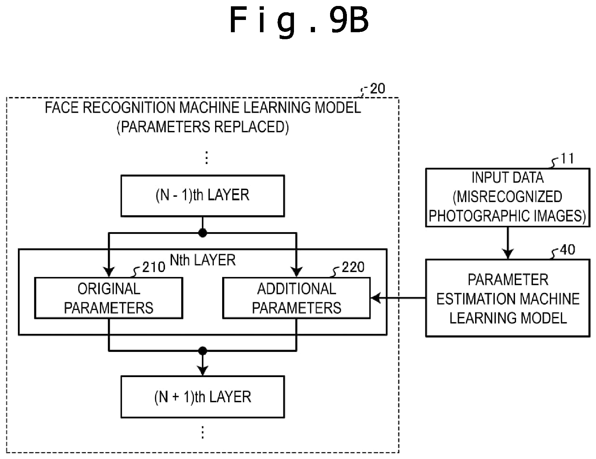

   Fig. 9B is a schematic diagram schematically depicting a configuration of a face recognition machine learning model after parameter replacement, applicable to the first embodiment.
[Fig. 10]

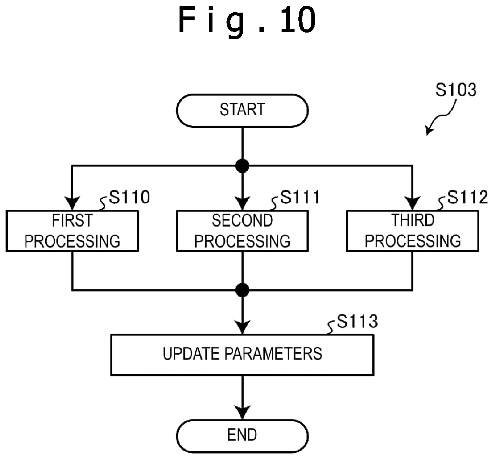

   Fig. 10 is an example of a flowchart for describing parameter update processing according to the first embodiment.
[Fig. 11A]

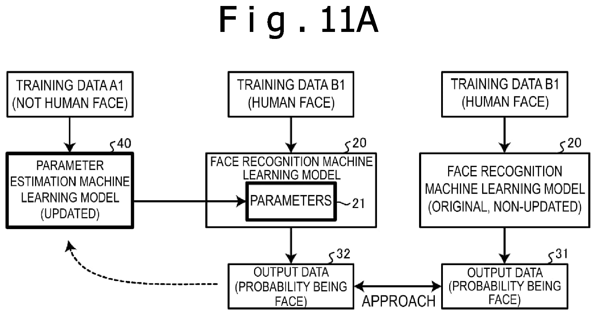

   Fig. 11A is a schematic diagram for describing the parameter update processing according to the first embodiment.
[Fig. 11B]

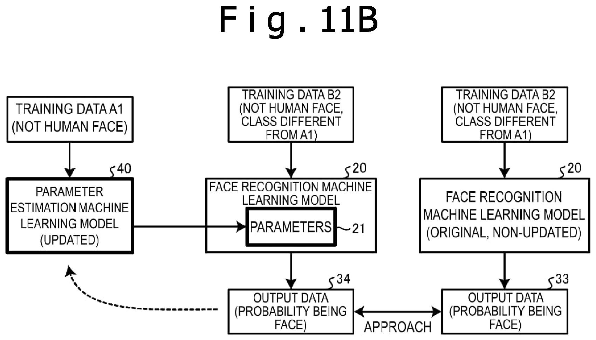

   Fig. 11B is a schematic diagram for describing the parameter update processing according to the first embodiment.
[Fig. 11C]

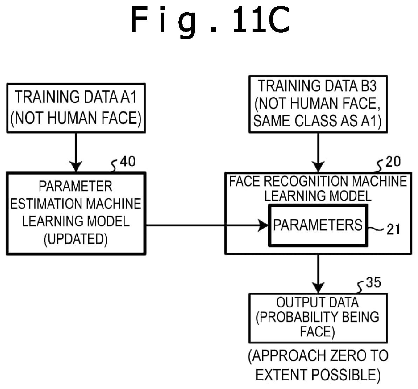

   Fig. 11C is a schematic diagram for describing the parameter update processing according to the first embodiment.
[Fig. 12]

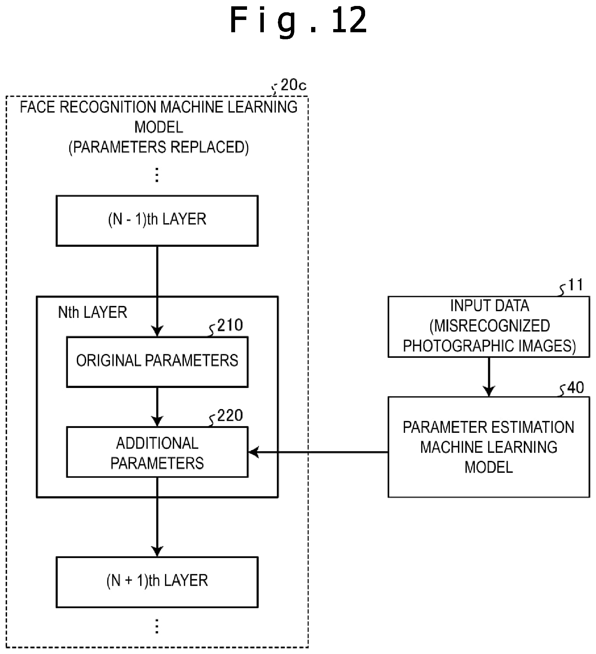

   Fig. 12 is a schematic diagram for describing an example of adding additional parameters in series to original parameters of the face recognition machine learning model as a modification of the first embodiment.
[Fig. 13]

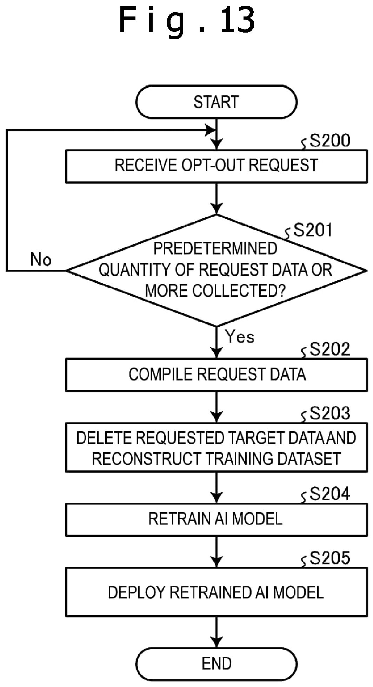

   Fig. 13 is an example of a flowchart depicting processing for opt-out according to the existing technology.
[Fig. 14]

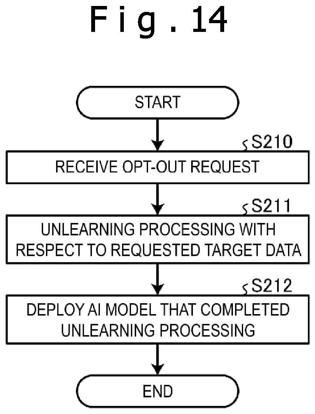

   Fig. 14 is an example of a flowchart depicting processing for opt-out according to a second embodiment.
[Fig. 15]

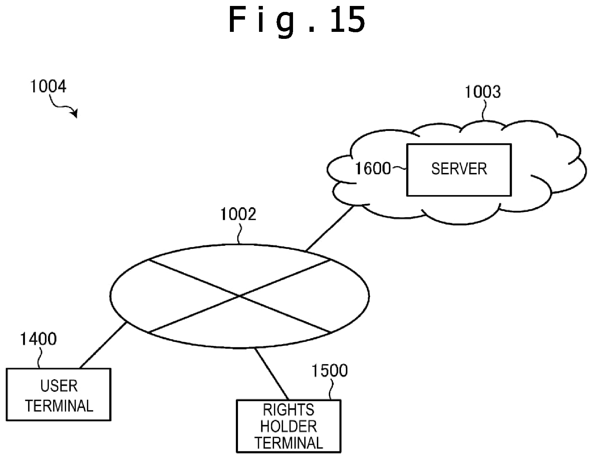

   Fig. 15 is a schematic diagram depicting a configuration of an example of an information processing system applicable to the second embodiment.
[Fig. 16]

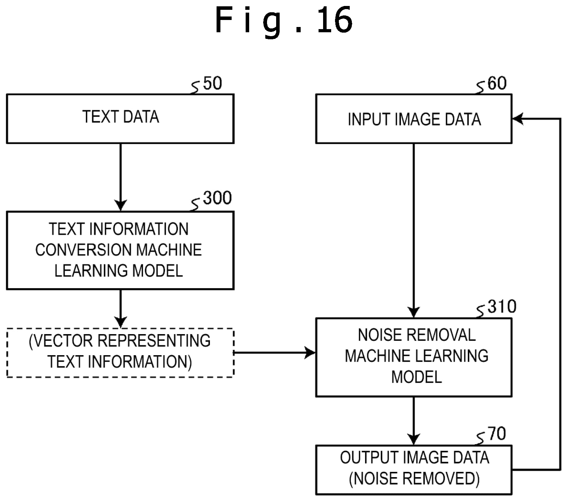

   Fig. 16 is a schematic diagram for describing image generation processing based on a diffusion generative model, according to existing technology.
[Fig. 17]

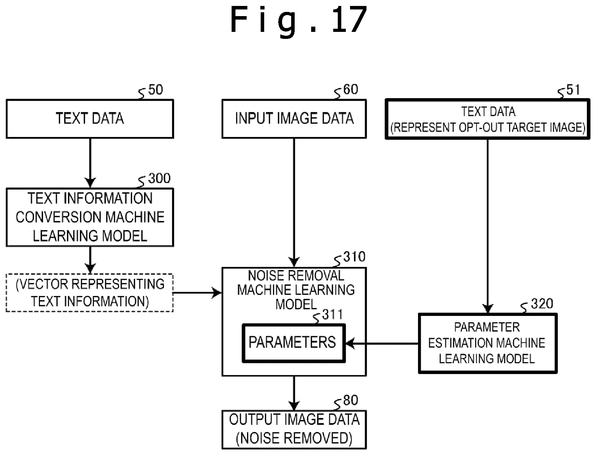

   Fig. 17 is a schematic diagram for schematically describing an application example of a model according to the second embodiment.
[Fig. 18]

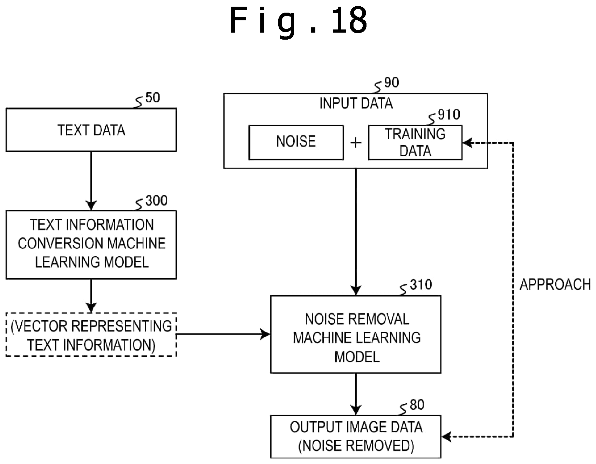

   Fig. 18 is a schematic diagram for schematically describing a training method of a diffusion generative model.
[Fig. 19]

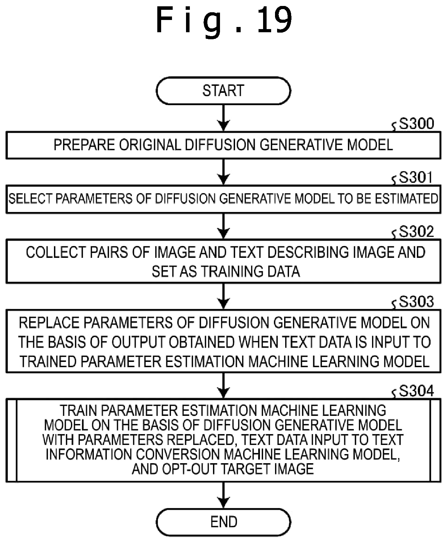

   Fig. 19 is an example of a flowchart depicting a procedure for training a parameter estimation machine learning model according to the second embodiment.
[Fig. 20]

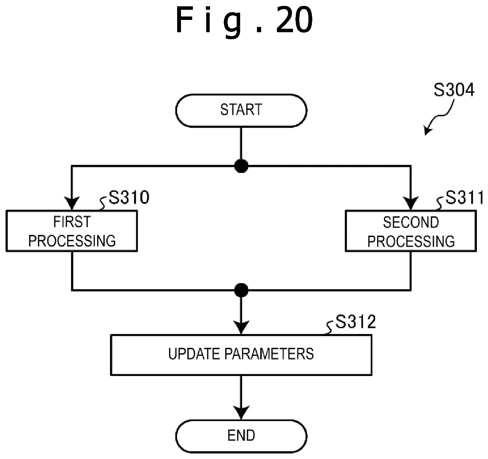

   Fig. 20 is an example of a flowchart for describing the parameter update processing according to the second embodiment.
[Fig. 21A]

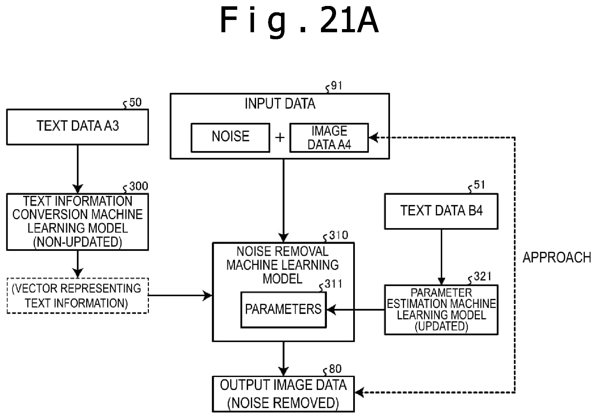

   Fig. 21A is a schematic diagram for describing the parameter update processing according to the second embodiment.
[Fig. 21B]

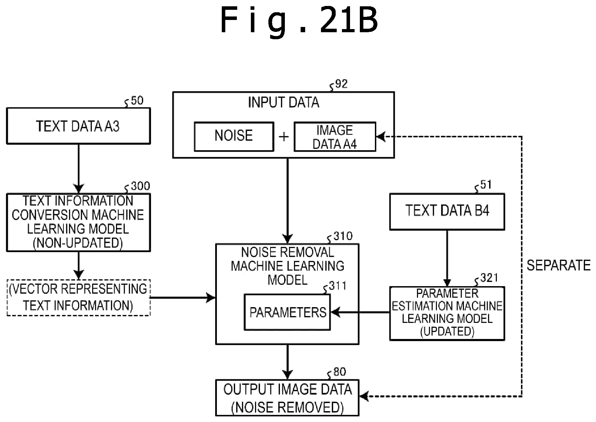

   Fig. 21B is a schematic diagram for describing the parameter update processing according to the second embodiment.

### Description of Embodiments

Hereinafter, embodiments of the present disclosure will be described in detail with reference to the drawings. Note that, in the following embodiments, the same components are denoted by the same reference signs, and a redundant description thereof will be omitted.

Hereinafter, the embodiments of the present disclosure will be described in the following order.
1. Overview of Technology According to Present Disclosure
2. First Embodiment of Present Disclosure
2-1. Overview of First Embodiment
2-2. More Specific Description of First Embodiment
2-2-1. Configuration Applicable to First Embodiment
2-2-2. Processing According to First Embodiment
2-3. Modifications of First Embodiment
2-4. Other Application Examples of First Embodiment
3. Second Embodiment of Present Disclosure
3-1. Background According to Second Embodiment
3-2. Overview of Second Embodiment
3-3. More Specific Description of Second Embodiment
3-3-1. Configuration Applicable to Second Embodiment
3-3-2. Processing According to Second Embodiment
3-3-3. System Configuration Examples Applicable to Second Embodiment
3-4. Modifications of Second Embodiment

### 1. Overview of Technology According to Present Disclosure

The present disclosure relates to training, separate from an artificial intelligence (AI) model trained in advance (referred to as original AI model), another AI model to which data representing information desirably forgotten by the original AI model is input and which outputs weights (parameters) of the original AI model in a case in which the original AI model successfully forgets the information. By replacing the parameters of the original AI model with the output of the trained other AI model, it is possible to cause the original AI model to forget the specified data or concepts.

According to the technology of the present disclosure, there is no need to perform training each time a need arises to cause an AI model to forget certain information, thereby facilitating realization of a forgetting process in a short period of time at low cost.

Note that "causing an AI model to forget (certain information)" refers to invalidating the training of specific information in a trained AI model. That is, "causing an AI model to forget" means invalidating the training based on specific information (training data) in a trained AI model trained by using a training dataset including the specific information.

For example, in a case in which an AI model trained to recognize a human face from a photographic image is trained to recognize, as a human face, an object that is not a human face but is misrecognized as a human face, the training with respect to the object is invalidated (caused to be forgotten). Further, in an AI model trained by using training data X1 to X4, in a case in which, for example, a rights holder of the training data X3 prohibits utilization of the training data X3 for training, the training by the training data X3 is invalidated (caused to be forgotten).

Not limited to the above, "causing the AI model to forget" may be causing the trained AI model to forget training based on specific information or an effect equivalent thereto, or may be treating specific information that was used to train the trained AI model as if the information never existed or an effect equivalent thereto. Furthermore, "causing the AI model to forget" may be causing the trained AI model trained by using specific information to be in a state of having been trained without using the specific information or an effect equivalent thereto.

As such technology for causing an AI model to forget, machine unlearning technology is known. For example, PTL 1 describes a technology for training an AI model trained by using specific data such that the output of the AI model when the specific data is input becomes identical to the output of an AI model not trained using the specific data. The technology described in PTL 1 is common to the present disclosure in that a trained AI model is caused to forget specific data, but requires training for each data to be forgotten.

Further, NPL 1 describes a technology for finely adjusting weights so that an image irrelevant to specified text is generated in a diffusion model-based generative AI model I. The technology described in NPL 1 is common to the present disclosure in that a trained AI model is caused to forget specific data, but requires training for each data to be forgotten.

In contrast, according to the technology of the present disclosure, parameters of a target original AI model are replaced with parameters obtained by training another AI model with respect to the original AI model, causing the original AI model to forget (invalidate) the training related to specific information. Accordingly, by applying the technology of the present disclosure, there is no need to train the original AI model for each data to be forgotten, making it possible to realize forgetting processing (unlearning processing) in a short period of time at low cost as compared with the existing technology.

### 2. First Embodiment of Present Disclosure

Next, a first embodiment of the present disclosure will be described. The first embodiment is an example in which the technology according to the present disclosure is applied to a camera.

A camera having a function of automatically recognizing and focusing on a human face is known. As an example of a malfunction of such a camera, conceivably an object (such as a stuffed animal) that is not a person and is placed behind the camera is recognized as a face. By applying the technology according to the present disclosure to such a camera, it is possible to quickly correct such misrecognition.

Fig. 1 is a schematic diagram for schematically describing an application example of a model according to existing technology. As depicted in Fig. 1, in a method of automatically recognizing a human face by a camera in the existing technology, it is conceivable to incorporate, into the camera, a face recognition machine learning model 20 (second machine learning model) that uses photographic images as input data 10 (second training data) and "a probability of a face being captured in the photograph" as output data 30.

In the first embodiment, for the original face recognition machine learning model 20, a machine learning model for estimating parameters of the model is prepared.

Fig. 2 is a schematic diagram for schematically describing an application example of the model according to the first embodiment. As depicted in Fig. 2, in the first embodiment, a parameter estimation machine learning model 40 (first machine learning model) that estimates parameters (such as weights) of the face recognition machine learning model 20 that is mounted on the camera and performs face recognition is prepared separately from the face recognition machine learning model 20.

In Fig. 2, photographic images misrecognized as containing a human face with a predetermined probability or higher are input as input data 11 (first training data) to the parameter estimation machine learning model 40. In other words, the input data 11 can be regarded as photographic images desirably not misrecognized as photographic images containing a human face. Examples of such photographic images desirably not misrecognized as photographic images containing a human face include a stuffed animal and a doll that include face parts such as eyes, a nose, and a mouth.

The parameter estimation machine learning model 40 is trained on the basis of the input data 11. More specifically, the parameter estimation machine learning model 40 is trained so that the output thereof becomes "parameters 21 (first parameters) of the face recognition machine learning model 20 in a case of successful correction so as not to perform misrecognition while maintaining a high recognition accuracy state". The parameter estimation machine learning model 40 thus trained outputs the parameters 21. The parameters 21 output from the parameter estimation machine learning model 40 are incorporated into the face recognition machine learning model 20. For example, the parameters 21 are used to replace parameters (second parameters) originally included in the face recognition machine learning model 20.

In the first embodiment, as described above, the parameters 21 of the face recognition machine learning model 20 mounted on the camera are replaced by using the output of the parameter estimation machine learning model 40 trained by using, as training data, images desirably not misrecognized. In the first embodiment, this makes it possible to quickly perform correction after the trained face recognition machine learning model 20 is deployed to the target device (camera in this example).

The model redeployment processing according to the first embodiment and the model redeployment processing according to the existing technology will be compared with reference to Fig. 3 and Fig. 4. Fig. 3 is an example of a flowchart depicting the redeployment processing of the model according to the existing technology. Fig. 4 is an example of a flowchart depicting the redeployment processing of the model according to the first embodiment. Note that the respective processing in Fig. 3 and Fig. 4 is executed by, for example, an information processing device having a function of training the model.

In Fig. 3, upon receipt of a request to correct misrecognition (step S10), the information processing device corrects the training data or the training method for training the face recognition machine learning model 20 (step S11a). The information processing device retrains the face recognition machine learning model 20 according to the training data or the training method corrected in step S11a (step S12a). The information processing device redeploys the retrained face recognition machine learning model 20 to the target device (camera in this example) (step S13).

In Fig. 4, upon receipt of a request to correct misrecognition (step S10), the information processing device estimates the parameters 21 of the face recognition machine learning model 20 by the parameter estimation machine learning model 40 (step S11b). The information processing device replaces the parameters 21 of the face recognition machine learning model 20 with the parameters estimated in step S11b (step S12b). The information processing device redeploys the face recognition machine learning model 20 with the parameters replaced to the target device (step S13).

Thus, in the existing technology, in a case in which the face recognition machine learning model 20 is corrected after deployment, the face recognition machine learning model 20 is retrained. On the other hand, in the first embodiment, there is no need to perform retraining after deployment, and the face recognition machine learning model 20 can be corrected by simply performing the processing of replacing the parameters (weights). This makes it possible to correct the model quickly and easily as compared with the existing technology.

### 2-2. More Specific Description of First Embodiment

Next, the first embodiment will be described in more detail.

### 2-2-1. Configuration Applicable to First Embodiment

A configuration applicable to the first embodiment will now be described. Fig. 5 is a schematic diagram depicting a configuration of an example of an information processing system applicable to the first embodiment.

In Fig. 5, an information processing system 1000 includes a server 1300 and a camera 1100 connected via a communication network 1002. The communication network 1002 may be the Internet or may be a local area network (LAN) constructed in a closed environment such as an in-house network. The camera 1100 is connected to the communication network 1002 by wireless communication such as wireless fidelity (Wi-Fi). Not limited thereto, the camera 1100 may be connected to the communication network 1002 by wired communication.

The server 1300 may acquire the face recognition machine learning model 20 deployed in the camera 1100 from the camera 1100 via the communication network 1002, for example. Further, the server 1300 may include the parameter estimation machine learning model 40 described above, and replace the parameters of the face recognition machine learning model 20 acquired from the camera 1100 with the parameters estimated and output by the parameter estimation machine learning model 40.

In the example in Fig. 5, the server 1300 is depicted as being configured in a cloud network 1003 connected to the communication network 1002. Not limited thereto, the server 1300 may be configured by a single computer or may be configured by a distributed plurality of computers.

### Configuration Example of Camera

Fig. 6 is a block diagram depicting a configuration of an example of the camera 1100 applicable to the first embodiment.

In Fig. 6, the camera 1100 includes a sensor 1110, a signal processing unit 1120, an image processing unit 1121, a frame memory 1122, an output I/F 1123, and a memory card I/F 1124. The memory card I/F 1124 is, for example, a memory card slot, and a card-type storage medium utilizing a flash memory, for example, can be mounted therein.

The camera 1100 further includes a central processing unit (CPU) 1140, a read only memory (ROM) 1141, a random access memory (RAM) 1142, a storage device 1143, a communication I/F 1144, an AI processing unit 1130, and a UI unit 1150.

The storage device 1143 is a nonvolatile storage medium such as a flash memory, for example. The storage device 1143 may be shared with the ROM 1141. The CPU 1140 operates, by using the RAM 1142 as a work memory, according to programs stored in the ROM 1141 and the storage device 1143, and controls the overall operation of this camera 1100.

The UI unit 1150 includes a control element and a display device, and provides a user interface (UI) to the user. The communication I/F 1144 controls communication with the communication network 1002 by wireless communication or wired communication according to instructions from the CPU 1140.

The AI processing unit 1130 includes a memory and a calculation unit, and executes processing by the face recognition machine learning model 20 according to instructions by the CPU 1140. A digital signal processor (DSP) may be applied to the AI processing unit 1130. Not limited thereto, the function of the AI processing unit 1130 may be realized by the CPU 1140 according to a program.

The sensor 1110 includes, for example, a pixel array in which photodiodes as light-receiving elements are arrayed in an array, and a drive circuit for driving the pixel array. The sensor 1110 outputs a pixel signal corresponding to light received by the pixel array from a subject via an optical system 1111. The sensor 1110 is controlled in operations, such as exposure and readout of the pixel signals from the light-receiving element, according to instructions from the signal processing unit 1120 described below, for example. Further, the optical system 1111 includes a focus adjustment mechanism and an iris adjustment mechanism.

The signal processing unit 1120 may control the timing of exposure by the sensor 1110, the readout of the pixel signals, and the like according to instructions from the CPU 1140. The signal processing unit 1120 performs predetermined signal processing such as noise removal processing and gain adjustment processing on analog pixel signals output from the sensor 1110, converts the analog pixel signals subjected to the signal processing into digital pixel data, and outputs the digital pixel data.

Further, the signal processing unit 1120, for example, generates focus information and iris information on the basis of pixel data, controls the focus adjustment mechanism and the iris adjustment mechanism in the optical system 1111, and realizes auto focus adjustment and auto iris adjustment. The signal processing unit 1120 may control the focus adjustment mechanism and the iris adjustment mechanism in the optical system 1111 according to an output of the AI processing unit 1130 described below.

The image processing unit 1121 writes the pixel data output from the signal processing unit 1120 to the frame memory 1122. The image processing unit 1121 performs predetermined image processing such as development processing on the image data written to the frame memory 1122 to generate image data in units of frames. The image processing unit 1121 writes the image data of one frame, for example, on which the image processing has been performed, to the frame memory 1122 again. The camera 1100 may output the image data written to the frame memory 1122 to the outside from the output I/F 1123 according to the control by the CPU 1140. Alternatively, the data may be supplied to the memory card I/F 1124 and stored in a storage medium attached thereto.

### Configuration Example of Server

Fig. 7 is a block diagram depicting a configuration of an example of the server 1300 applicable to the first embodiment. Note that, for the sake of description, it is assumed here that the server 1300 is configured as a single piece of hardware.

In Fig. 7, the server 1300 includes a CPU 1301, a ROM 1302, a RAM 1303, a storage device 1304, a training processing unit 1305, and a communication I/F 1306 communicably connected to one another via a bus 1310.

The storage device 1304 is a nonvolatile storage medium such as a flash memory or a hard disk drive, for example. The CPU 1301, by using the RAM 1303 as a work memory, operates according to programs stored in the storage device 1304 and the ROM 1302, and controls the overall operation of this server 1300. The communication I/F 1306 controls communication via the communication network 1002.

The server 1300 may be further connected to an input device that receives user input and a display device that displays information.

In the server 1300, the training processing unit 1305 has a function as a training unit that trains the AI model. For example, the training processing unit 1305 includes the parameter estimation machine learning model 40 and acquires the face recognition machine learning model 20 from the camera 1100. The training processing unit 1305 trains the parameter estimation machine learning model 40 on the basis of the input data 11 that are misrecognized photographic images. The training processing unit 1305 replaces the parameters of the face recognition machine learning model 20 acquired from the camera 1100 with the parameters 21 estimated by the parameter estimation machine learning model 40.

Note that the training processing unit 1305 may be realized by controlling the DSP by the CPU 1301 or may be realized by operating a predetermined program on the CPU 1301. Further, the server 1300 may further include another CPU for configuring the training processing unit 1305.

The program for realizing the training processing unit 1305 in the server 1300 can be acquired from the outside via the communication network 1002 through communication via, for example, a communication I/F 1006, and installed on the server 1300. Not limited thereto, the program may be provided by being stored in a detachable storage medium such as a compact disk (CD), a digital versatile disk (DVD), or a universal serial bus (USB) memory, or may be provided from an external device via a data I/F (not illustrated).

### 2-2-2. Processing According to First Embodiment

Next, processing according to the first embodiment will be described. Fig. 8 is an example of a flowchart depicting a procedure for training the parameter estimation machine learning model 40 according to the first embodiment. Each process of the flowchart depicted in Fig. 8 may be executed by an operator who operates the parameter estimation machine learning model 40 (hereinafter, simply referred to as "operator"), or some or all of the processes may be automatically executed in the server 1300, for example.

First, for example, the operator trains the original face recognition machine learning model 20 in advance (step S100).

Next, for example, the operator selects the parameters of the face recognition machine learning model 20 that are to be estimated by the parameter estimation machine learning model 40 (step S101). A technique called low-rank adaptation (LoRA), which is one efficient additional learning technique, can be applied to the selection of the parameters in step S101. By applying LoRA, it is possible to reduce a scale of the parameters to be estimated. A technique called LoRA (2) proposes preparing an additional parameter in parallel with an original parameter, and performing training with that portion only. A method of adding parameters by LoRA and estimating only the additional parameter portion is conceivable.

A parameter selection method to which LoRA is applied according to the first embodiment will be described with reference to Fig. 9A and Fig. 9B. Note that, in Fig. 9A and Fig. 9B, only the parameters (weight matrices) are depicted and activation functions are omitted.

Fig. 9A is a schematic diagram schematically depicting a configuration of a face recognition machine learning model 20a before parameter replacement, applicable to the first embodiment. As depicted in Fig. 9A, the face recognition machine learning model 20a has a configuration in which N is an integer of 2 or greater, an output of an (N - 1)th layer is input to an Nth layer, and an output of the Nth layer is input to the next (N + 1)th layer. In this configuration, a case in which parameters (original parameters 210) of the Nth layer are the parameters to be estimated will be considered. The original parameters 210 correspond to the parameters 21 described above.

Fig. 9B is a schematic diagram schematically depicting a configuration of a face recognition machine learning model 20b after parameter replacement, applicable to the first embodiment. As depicted in Fig. 9B, the training processing unit 1305 trains the parameter estimation machine learning model 40 on the basis of the input data 11 that are misrecognized photographic images, and estimates additional parameters 220. In the Nth layer of the face recognition machine learning model 20b, the training processing unit 1305 adds the additional parameters 220 estimated by the parameter estimation machine learning model 40 to the original parameters 210 so as to be processed in parallel while keeping the original parameters 210.

In the face recognition machine learning model 20b, the output of the (N - 1)th layer is processed in parallel by the original parameters 210 and the additional parameters 220 in the Nth layer, and the respective parameters are input to the (N + 1)th layer. In this case, given "X" as the output by the (N - 1)th layer, "α" as the processing based on the original parameters 210, and "β" as the processing based on the additional parameters 220, the output from the Nth layer to the (N + 1)th layer can be expressed as αX + βX. The original parameters 210 of the face recognition machine learning model 20 are replaced with the original parameters 210 and the additional parameters 220.

The operator may select the parameters having the best performance by various selection methods.

Returning to Fig. 8, the operator prepares a training dataset for training the parameter estimation machine learning model 40 (step S102). More specifically, the operator collects image data of human faces and image data not of human faces and assigned with class labels (dog, cat, and the like). The image data of human faces may serve as the image data used for training the face recognition machine learning model 20 in step S100. The operator uses the image data of human faces and the image data not of human faces thus collected as a training dataset for training the parameter estimation machine learning model 40.

Next, the operator, for example, causes the training processing unit 1305 to train the parameter estimation machine learning model 40 by using the training dataset prepared in step S102 (step S103).

More specifically, the training processing unit 1305 replaces the parameters 21 of the face recognition machine learning model 20 with the output obtained when, among the training dataset, image data An not of human faces is input. Further, the training processing unit 1305 trains the parameter estimation machine learning model 40 on the basis of a result obtained when, among the training dataset, image data Bn different from the image data An is input to the face recognition machine learning model 20 with the parameters 21 replaced.

The training processing unit 1305 updates the parameters 21 of the face recognition machine learning model 20 by using the parameters output by the parameter estimation machine learning model 40 thus trained. At this time, the training processing unit 1305 does not update, among the parameters 21 of the face recognition machine learning model 20, the parameters (original parameters 210) other than the parameters (additional parameters 220) selected in step S101.

Fig. 10 is an example of a flowchart for describing the parameter update processing according to the first embodiment. The flowchart of Fig. 10 depicts the processing in step S103 in the flowchart of Fig. 8.

In the first embodiment, as depicted in Fig. 10, the training processing unit 1305 executes first processing (step S110), second processing (step S111), and third processing (step S112) as the training processing of the parameter estimation machine learning model 40. The training processing unit 1305 integrates the results of the first processing, the second processing, and the third processing, and updates the parameters 21 of the face recognition machine learning model 20 (step S113).

Fig. 11A, Fig. 11B, and Fig. 11C are schematic diagrams for describing the parameter update processing according to the first embodiment. The first processing (step S110), the second processing (step S111), and the third processing (step S112) described above will be described with reference to Fig. 11A, Fig. 11B, and Fig. 11C.

In Fig. 11A, in the first processing (step S110), for example, the training processing unit 1305 inputs training data A1 based on the image data not of human faces to the trained parameter estimation machine learning model 40. The training processing unit 1305 updates the parameters 21 of the face recognition machine learning model 20 with the parameters estimated by the trained parameter estimation machine learning model 40 on the basis of the input training data A1. At this time, the training processing unit 1305 updates only, among the parameters 21 of the face recognition machine learning model 20, the parameters selected in the processing of step S101 in Fig. 8, and does not update the other parameters.

The training processing unit 1305 inputs training data B1 based on the image data of human faces to the face recognition machine learning model 20 with the updated parameters 21 and to the original face recognition machine learning model 20 with the non-updated parameters 21. The original face recognition machine learning model 20 outputs output data 31 indicating a probability of being a face. Similarly, the face recognition machine learning model 20 with the updated parameters 21 outputs output data 32 indicating a probability of being a face.

The training processing unit 1305 trains the trained parameter estimation machine learning model 40 so that the probability indicated by the output data 31 and the probability indicated by the output data 32 approach each other.

In Fig. 11B, in the second processing (step S111), as in the example in Fig. 11A, the training processing unit 1305 inputs the training data A1 based on image data not of human faces to the trained parameter estimation machine learning model 40, for example. The training processing unit 1305 updates the parameters 21 of the face recognition machine learning model 20 with the parameters estimated by the trained parameter estimation machine learning model 40 on the basis of the input training data A1. At this time, the training processing unit 1305 updates only, among the parameters 21 of the face recognition machine learning model 20, the parameters selected in the processing of step S101 in Fig. 8, and does not update the other parameters.

The training processing unit 1305 inputs training data B2, which is based on image data not of human faces and different in class from the image data of the training data A1, to the face recognition machine learning model 20 with the updated parameters 21 and the original face recognition machine learning model 20 not with the updated parameters 21. The original face recognition machine learning model 20 outputs output data 33 indicating a probability of being a face. Similarly, the face recognition machine learning model 20 with the updated parameters 21 outputs output data 34 indicating a probability of being a face.

The training processing unit 1305 trains the trained parameter estimation machine learning model 40 so that the probability indicated by the output data 33 and the probability indicated by the output data 34 approach each other.

In Fig. 11C, in the third processing (step S112), as in the examples in Fig. 11A and Fig. 11B, the training processing unit 1305 inputs the training data A1 based on the image data not of human faces to the trained parameter estimation machine learning model 40, for example. The training processing unit 1305 updates the parameters 21 of the face recognition machine learning model 20 with the parameters estimated by the trained parameter estimation machine learning model 40 on the basis of the input training data A1. At this time, the training processing unit 1305 updates only, among the parameters 21 of the face recognition machine learning model 20, the parameters selected in the processing of step S101 in Fig. 8, and does not update the other parameters.

The training processing unit 1305 inputs the training data B3, which is based on the image data not of human faces and belonging to the same class as that of the image data of the training data A1, to the face recognition machine learning model 20 with the updated parameters 21. The face recognition machine learning model 20 with the updated parameters 21 outputs output data 35 indicating a probability of being a face.

The training processing unit 1305 trains the trained parameter estimation machine learning model 40 so that the value of the probability indicated by the output data 35 approaches zero to the extent possible.

The training processing unit 1305 uses a function shown in equation (1) below as an objective function, and updates only the parameters of the trained parameter estimation machine learning model 40 trained by each of the first processing, the second processing, and the third processing described above so as to minimize the objective function.
[Math. 1] $\begin{matrix}{λ}_{1} {\sum }_{{x}_{B 1} ∈ \left\{facial images\right\} , {x}_{A 1} ∈ \left\{any images\right\}} \left|F\left({x}_{B 1}\right)-{f}_{θ}\left({x}_{A 1}\right)\left({x}_{B 1}\right)\right| + \\ {λ}_{2} {\sum }_{{x}_{B 2} ∈ \left\{images of different classes from {x}_{A 1}\right\} , {x}_{A 1} ∈ \left\{any non facial images\right\}} \left|F\left({x}_{B 2}\right)-{f}_{θ}\left({x}_{A 1}\right)\left({x}_{B 2}\right)\right| + \\ {λ}_{3} {\sum }_{{x}_{B 3} ∈ \left\{images of the same class from {x}_{A 1}\right\} , {x}_{A 1} ∈ \left\{any images\right\}} \left|{f}_{θ}\left({x}_{A 1}\right)\left({x}_{B 2}\right)\right|\end{matrix}$ (1)

Note that, in equation (1), the first term, the second term, and the third term of the addition correspond to the first processing, the second processing, and the third processing, respectively. Further, in equation (1), the function F represents the original face recognition machine learning model 20, and subscripts 1, 2, and 3 represent the first processing, the second processing, and the third processing, respectively. Furthermore, the value θ represents the parameters of the parameter estimation machine learning model 40, and the function f_{θ} represents a function that outputs the face recognition machine learning model 20 with the updated parameters 21.

Further, the variables λ₁, λ₂, and λ₃ are parameters for controlling the balance of the first processing, the second processing, and the third processing. The variables λ₁, λ₂, and λ₃ may be adjusted by the user while viewing performance, for example.

The training processing unit 1305 replaces the parameters 21 of the face recognition machine learning model 20 by using the parameters of the updated parameter estimation machine learning model 40 obtained by the minimization based on equation (1). The server 1300 deploys the face recognition machine learning model 20 with the replaced parameters 21 to, for example, the camera 1100.

In the camera 1100, the AI processing unit 1130 may execute face recognition processing by the deployed face recognition machine learning model 20 on the image data obtained by the imaging by the sensor 1110. In this case, the AI processing unit 1130 can focus on a human face while avoiding focusing on an object that may be misrecognized as a human face by controlling, for example, the optical system 1111 via, for example, the signal processing unit 1120.

Thus, in the first embodiment of the present disclosure, in a case in which an AI model is to be corrected after deployment, the AI model can be corrected simply by replacing the parameters of the AI model without retraining the AI model. This makes it possible to more quickly and easily execute correction of the AI model after deployment.

For example, by applying the first embodiment of the present disclosure to a camera that performs focus adjustment by AI, even in a case in which a target not intended by AI is misrecognized as a target of focus adjustment, it is possible to correct an error in focus adjustment caused by misrecognition without retraining the AI model by simply replacing the parameters of the AI model.

### 2-3. Modifications of First Embodiment

Next, modifications of the first embodiment will be described.

In the above description, an example in which the camera 1100 has a function of automatically recognizing and focusing on a human face has been described. Not limited thereto, the configuration according to the first embodiment can also be applied to a camera having a function of automatically focusing on a specified person by replacing the "probability of being a face" with the "probability of capturing the face of a specified person" in the implementation method described above.

Further, in the above description, the focused target is a "human face", but the target is not limited to this example. For example, in the implementation method described above, the configuration according to the first embodiment can be applied to a model that recognizes the presence of an object other than a human face by replacing "human face" with another object.

The above has described a method for "making it difficult to recognize all images of a specified class as faces". The first embodiment is not limited thereto and can also be utilized for "making it difficult to recognize only a specified image as a face" by treating each image as having an entirely different class label assigned thereto.

In the above description, as a method of selecting the parameters of the face recognition machine learning model 20 to be estimated by the parameter estimation machine learning model 40, a method of adding the additional parameters 220 in parallel to the original parameters 210 by LoRA has been described (refer to Fig. 9B). The method is not limited to this example; it is also possible to estimate the additional parameters 220 added in series to the original parameters 210 by LoRA.

Fig. 12 is a schematic diagram for describing an example of adding the additional parameters 220 in series to the original parameters 210 of the face recognition machine learning model 20 as a modification of the first embodiment. The parameter estimation machine learning model 40 is trained on the basis of the input data 11, which are misrecognized photographic images, and estimates the additional parameters 220. In an Nth layer 200c_{N} of a face recognition machine learning model 20c, the training processing unit 1305 adds the additional parameters 220 estimated by the parameter estimation machine learning model 40 to the original parameters 210 so as to be processed in series while keeping the original parameters 210.

In the face recognition machine learning model 20b, the output of the (N - 1)th layer is processed by the original parameters 210 in the Nth layer, and the processing result of the original parameters 210 is further processed by the additional parameters 220. The output based on the additional parameters 220 in the Nth layer is input to the (N + 1)th layer. In this case, given "X" as the output by the (N - 1)th layer, "α" as the processing based on the original parameters 210, and "β" as the processing based on the additional parameters 220, the output from the Nth layer to the (N + 1)th layer can be expressed as βαX. The original parameters 210 of the face recognition machine learning model 20 are replaced with the original parameters 210 and the additional parameters 220.

In the above description, as a method of invalidating specific training data, the processing of making target data unrecognizable by reducing f_{θ}(x_{A1})(x_{B3}) in equation (1) has been described. The method of invalidating specific training data is not limited to this example.

For example, a model that outputs a probability as close to zero as possible for the class may be created for each class, and the parameter estimation machine learning model 40 may be trained using the parameters of that model as the correct labels for the parameter estimation machine learning model 40.

As another example, the correct labels for the parameter estimation machine learning model 40 can be obtained by calculating a degree of influence by using technology (influence function, for example) for calculating the degree of influence that each data point has on the parameters and correcting the parameters such that the degree of influence of a specified class is zero. The parameter estimation machine learning model 40 may be trained by using the correct labels.

### 2-4. Other Application Examples of First Embodiment

Next, other application examples of the first embodiment will be described. In the above description, an example in which the technology according to the present disclosure is applied to a camera has been described as the first embodiment. However, the technology according to the present disclosure is not limited to application to a camera.

Technologies for generating an image by using a generative model by AI are known. The technology according to the present disclosure can also be used to prevent a generative model from generating undesirable images.

Technologies for classifying spam emails from a large number of received emails by using an AI-based spam classification model are known. The technology according to the present disclosure can also be used for correction of misclassification in a spam mail classification model.

Technologies for making a recommendation to a user on the basis of user interest in an electronic commerce (EC) site are known. The technology according to the present disclosure can also be used to correct an erroneous recommendation (case in which information of no interest to the user is recommended, for example) on an EC site.

Pet robots whose operation is controlled by AI are known. Some pet robots can be trained by having an AI model learn to perform actions in response to user's behavior. The technology according to the present disclosure can be used to train a pet robot so as not to cause the pet robot to perform an undesirable behavior. For example, the pet robot may exhibit undesirable behavior, such as taking photos at undesirable moments by an automatic photo-taking function, or moving in a direction not particularly desirable. By applying the technology according to the present disclosure to the training of the AI model of the pet robot, it is possible to suppress undesirable behavior by the pet robot.

### 3. Second Embodiment of Present Disclosure

Next, a second embodiment of the present disclosure will be described. The second embodiment relates to opting out of utilization of training data.

For example, to train a generative AI model in image generation AI that generates an image on the basis of text data or the like, it is necessary to use a large quantity of image data. A developer of the generative AI model, for example, can collect image data to be used as training data from image data published on the Internet, for example. On the other hand, a rights holder having rights to image data collected as training data, such as a creator of the image data, may not consent to the use, as training data, of the image data to which the rights holder holds the rights. In this case, the rights holder of the image data can execute an act of expressing an intention of non-consent to the developer or the like of the generative AI model that uses the image data as training data. This act of expressing an intention of non-consent is referred to as opt-out.

### 3-1. Background According to Second Embodiment

The background according to the second embodiment will now be described.

The European AI Act (EU Act 2023), passed by the European Parliament in May 2023, also regulates foundation models and generative AI. Article 28b(4) of the EU AI Act imposes the obligation below on providers of foundation models used in AI systems specifically intended to generate complex content such as text, images, audio, and video with varying levels of autonomy (generative AI), as well as on providers that specialize foundation models into generative AI systems.

The obligation is to "document and make publicly available a sufficiently detailed summary of the use of training data protected by copyright law, without prejudice to national or Union legislation on copyright" (Article 28b(4)(c) of the EU AI Act). Providers of foundation models and generative AI are required to make public a sufficiently detailed summary of the use of training data according to this obligation.

In Europe, a Directive on Copyright in the Digital Single Market (hereinafter referred to as the Copyright Directive) exists, which makes the reference below to the use of copyrighted works for AI training (Directive on Copyright in the Digital Single Market).

Article 3 of the Copyright Directive does not permit opting out of the use of training data for AI in scientific research conducted at research institutions. On the other hand, Article 4 of the Copyright Directive explicitly permits opt-out by rights holders in commercial use of AI and similar contexts. Providers of foundation models and generative AI intended for commercial use are required to accept opt-out requests based on the Copyright Directive, by virtue of the obligation to disclose copyright information under the EU AI Act (Article 28b(4)(c) of the EU AI Act).

Furthermore, such disclosure may also give rise to opt-out requests based on personal information. The "right to be forgotten" under the General Data Protection Regulation (GDPR) is defined as the erasure of data (GDPR, Article 17). Data subjects have the right to delete their own personal data on the basis of certain conditions. That is, making training data public suggests the possibility of opt-out under both the Copyright Directive and the GDPR.

### 3-2. Overview of Second Embodiment

Upon receiving an opt-out request related to AI training data, providers of foundation models and generative AI must delete the relevant AI training data and reconstruct the foundation model or the generative AI model. Retraining a foundation model incurs significant computational costs. Depending on the scale of the foundation model, this may require several months. That is, reconstructing a foundation model or a generative AI model inevitably requires a financial and time investment as an economic cost. Development of a method that can respond promptly to opt-out requests while minimizing computational costs is desired.

To carry out opt-out efficiently, a technology for technically changing the model without retraining is required. In recent years, a technique known as machine unlearning, as described above, has been attracting attention as a method for causing a model to forget specific data (invalidating specific data). For machine unlearning, reference is made to NPL 2 "Thanh Tam Nguyen, et al., "A Survey of Machine Unlearning", [online], Sep. 6, 2022 arXiv: 2209.02299, [retrieved Oct. 26, 2023], Internet, <https://arxiv.org/abs/2209.02299>".

With a model storing data subject to opt-out, deletion of such data is not easy in the AI context. NPL 2 aims to comprehensively examine the concepts, scenarios, methods, and application examples of machine unlearning. Specifically, NPL 2 introduces machine unlearning in cutting-edge research, and its formulation, design criteria, deletion requests, algorithms, and applications.

Fig. 13 is an example of a flowchart depicting the processing for opt-out according to existing technology. In the existing technology, as depicted in Fig. 13, when opt-out requests are received from rights holders of predetermined training data, for example, a process is adopted in which such requests are compiled to a certain extent before retraining is performed.

For example, a rights holder wishing to submit an opt-out request creates request data by entering the necessary information, such as the name of the data for which opt-out is being requested, in a predetermined form, and transmits the created request data to the information processing system related to the training of the generative AI model. When the opt-out request is received (step S200), the information processing system determines whether a predetermined quantity of request data or more has been collected in step S201 and, in a case in which the determination is made that such a quantity has not been collected (step S201, "No"), the processing returns to step S200. On the other hand, when the determination is made that the predetermined quantity of request data or more has been collected (step S201, "Yes"), the information processing system transitions the processing to step S202 and compiles the collected request data.

In the next step S203, the information processing system deletes, from the training dataset used for training the generative AI model, the data of the opt-out targets requested by the request data, and reconstructs the training dataset. The information processing system retrains the generative AI model by using the reconstructed training dataset in the next step S204, and deploys the retrained generative AI model to the target device in the next step S205.

Fig. 14 is an example of a flowchart depicting the processing for opt-out according to the second embodiment.

As described above, a rights holder wishing to submit an opt-out request creates request data according to a predetermined form and transmits the created request data to the information processing system related to the training of the generative AI model. Upon receipt of the opt-out request (step S210), the information processing system performs unlearning processing on the target data for which the opt-out request was made in the next step S211.

By this unlearning processing, the training based on the target data is invalidated in the generative AI model. In the next step S212, the information processing system deploys the generative AI model subjected to the unlearning processing to the target device.

As an example, a rights holder wishing to submit an opt-out request creates request data by using a UI provided by the information processing system, and operates, for example, a submit button provided on the UI to submit the created request data to the information processing system. The information processing system automatically starts the unlearning processing on the target data according to the submitted request data in response to the operation of the submit button, and deploys the generative AI model subjected to the unlearning processing to the device when the unlearning processing is completed.

Thus, in the second embodiment, it is possible to consistently execute, in accordance with submission of request data for an opt-out request, unlearning processing on the requested target data and deployment of the generative AI model subjected to the unlearning processing to the device.

In contrast, the opt-out processing according to the existing technology requires significant time and computational resources, such as manual intervention, deletion of data, and retraining, as described above. The second embodiment is configured as a real-time opt-out device capable of solving this problem.

With the incorporation of the training of forgetting based on machine unlearning according to the second embodiment into the system of an AI provider that provides generative AI, retraining in response to opt-out requests becomes unnecessary, making it possible to significantly reduce computational costs. As a result, it is possible to efficiently implement the processing from the opt-out request to the deployment of the generative AI model in terms of cost and time. With application of the second embodiment, the economic effect is particularly remarkable in a large-scale model such as a foundation model.

Examples of specific services to which the second embodiment is applicable include a large-scale language model provided online and a model for generating images from text. With application of the second embodiment to these models, retraining, which incurs large cost, is not required, and online model updating can be automatically executed. Furthermore, as described above, by applying the second embodiment to a system for training an AI model, it is possible to cause the AI model to forget (invalidate) the data of the opt-out request simply by having the rights holder perform, for example, a single click on the UI of a request form or similar interface when submitting the opt-out request.

### 3-3. More Specific Description of Second Embodiment

Next, the second embodiment will be described in more detail.

### 3-3-1. Configuration Applicable to Second Embodiment

A configuration applicable to the second embodiment will now be described. Fig. 15 is a schematic diagram depicting a configuration of an example of an information processing system applicable to the second embodiment.

In Fig. 15, an information processing system 1004 includes a server 1600, a user terminal 1400, and a rights holder terminal 1500 connected via the communication network 1002. The communication network 1002 may be the Internet or may be a LAN constructed in a closed environment such as an in-house network.

In the example in Fig. 15, the server 1600 is depicted as being configured in the cloud network 1003 connected to the communication network 1002. Not limited thereto, the server 1600 may be configured by a single computer or may be configured by a distributed plurality of computers.

The server 1600 includes a generative AI model, collects data (image data, for example) as training data to be used for the training of a generative AI model via the communication network 1002, for example, and creates a training dataset. The server 1600 may provide, for example, a service of generating image data with respect to the user terminal 1400 connected to the communication network 2, for example, by the generative AI model trained by using the training dataset. Not limited thereto, the server 1600 may deploy a part or all of the generative AI model to the user terminal 1400 via the communication network 1002.

The rights holder terminal 1500 is, for example, a terminal used by a rights holder who has the rights to a portion of the training data included in the training dataset created by the server 1600 to train the generative AI model. The rights holder terminal 1500 may be provided, by the server 1600, with a UI including a request form for requesting opt-out of the training data to which the rights holder has the rights, for example.

Note that, for the user terminal 1400 and the rights holder terminal 1500, a configuration of a general computer may be applied, and thus description thereof will be omitted here. Further, for the server 1600 as well, a configuration similar to that of the server 1300 described with reference to Fig. 7 may be applied, and thus the description thereof will be omitted here.

### 3-3-2. Processing According to Second Embodiment

In the second embodiment, an implementation example in a case in which the technology of the present disclosure is applied to a diffusion generative model that generates images from text will be described. In such a diffusion generative model, it is necessary to comply with the Copyright Directive and the opt-out based on the GDPR, as described above.

Such a diffusion generative model is often very large in scale, making it costly and unrealistic to remove a target image from the training data and perform retraining from scratch in response to an opt-out. As a method of responding to opt-outs without retraining from scratch, a technology has been proposed for preventing the generation of images similar to opt-out target images; however, the issue remains that training is required each time an opt-out request is submitted.

By applying the second embodiment to the response to opt-outs for diffusion generative models, it is possible to promptly remove the influence of the opt-out target data from the target model and cause the model to lose the ability to generate the opt-out target data, without performing retraining in response to acceptance of the opt-out requests.

Fig. 16 is a schematic diagram for describing image generation processing based on a diffusion generative model, according to existing technology.

In a diffusion generative model that generates images from text data 50 (second text data, second training data), at the time of image generation, a natural image is generated as output image data 70 by gradually removing noise from input image data 60 containing random noise as a source, by using a noise removal machine learning model 310 (second machine learning model) while using the information of the text data 50.

In general, the text data 50 cannot be used as is as input of the machine learning model. Therefore, in the diffusion generative model, the text data 50 is converted into a vector (vector representing text information) in a format easier to handle in the machine learning model, by using a dedicated text information conversion machine learning model 300. The noise removal machine learning model 310 uses this vector to convert the image being generated into an image with slightly reduced noise. The diffusion generative model can ultimately obtain the output image data 70 based on the natural image consistent with the text data 50 by starting from a random noise image and repeatedly performing noise removal on that image multiple times.

In the second embodiment, a method is proposed in which a machine learning model for estimating parameters of a diffusion generative model according to existing technology is prepared for the model, and an image targeted for opt-out is not generated.

Here, consider a case in which it is desired to prevent the generation of images that occur when a person's name is used to generate an image with a diffusion generative model and that person's facial image is generated, or when the name of a copyrighted work is used to generate an image with a diffusion generative model and an image similar to that copyrighted work is generated.

Fig. 17 is a schematic diagram for schematically describing an application example of a model according to the second embodiment. As depicted in Fig. 17, in the second embodiment, a parameter estimation machine learning model 320, which estimates parameters 311 of the noise removal machine learning model 310 for removing noise from the input image data 60 on the basis of a vector representing text information in a diffusion generative model, is prepared separately from the noise removal machine learning model 310.

In the second embodiment, text data 51 (person's name, copyrighted work name, or the like) representing an opt-out target image, that is, an image not desirably generated, is input to the parameter estimation machine learning model 320 (first machine learning model). The opt-out target image is not limited to an image not desirably generated. For example, the opt-out target image may be an image not desirably used or an image not desirably recognized.

The parameter estimation machine learning model 320 estimates and outputs the parameters 311 (first parameters) of the noise removal machine learning model 310 on the basis of the input text data 51 (first text data, first training data). At this time, the parameter estimation machine learning model 320 is trained such that the output parameters 311 correspond to "a case in which the model has been successfully corrected so as to not generate only the images not desirably generated, while retaining the generation capability for images unrelated to the images not desirably generated".

In the noise removal machine learning model 310, the parameters (second parameters) are replaced by using the parameters 311 output from the parameter estimation machine learning model 320. By this parameter replacement, the diffusion generative model can be quickly corrected based on the noise removal machine learning model 310.

In the existing technology, in a case in which the diffusion generative model is corrected, the noise removal machine learning model 310 is retrained. In contrast, in the second embodiment, there is no need to retrain the noise removal machine learning model 310, and the diffusion generative model can be corrected simply by performing the processing of replacing the weights (parameters 311) of the noise removal machine learning model 310. Therefore, by applying the second embodiment, it is possible to correct the diffusion generative model quickly and easily as compared with the existing technology.

Fig. 18 is a schematic diagram for schematically describing a training method of a diffusion generative model.

The diffusion generative model inputs, to the noise removal machine learning model 310, input data 90 obtained by intentionally adding noise to training data 910, which is image data. The diffusion generative model is trained to estimate the training data 910, which is image data before noise is added by the noise removal machine learning model 310. More specifically, in the diffusion generative model, the noise removal machine learning model 310 is trained so that output image data 80 obtained by noise removal is made to approach the training data 910.

### Details of Processing According to Second Embodiment

Next, the processing according to the second embodiment will be described in more detail. Fig. 19 is an example of a flowchart depicting a procedure for training the parameter estimation machine learning model 320 according to the second embodiment. Each process of the flowchart depicted in Fig. 19 may be executed by the operator, or some or all of the processes may be automatically executed in the server 1600, for example.

First, for example, the operator prepares a diffusion generative model to serve as a source. Here, it is assumed that the original noise removal machine learning model 310 is prepared (step S300).

Next, for example, the operator selects the parameters of the noise removal machine learning model 310 (diffusion generative model) to be estimated by the parameter estimation machine learning model 320 (step S301). The method of using LoRA described with reference to Fig. 8, Fig. 9A, Fig. 9B, and Fig. 12 can be applied to the selection of the parameters in step S301.

Next, for example, the operator collects a set of images and text data for describing the images, and sets the set as training data (step S302). Here, as the training data, the training data used to train the original noise removal machine learning model 310 (diffusion generative model) may be used.

Next, the operator replaces the parameters 311 of the diffusion generative model (noise removal machine learning model 310) with the parameters estimated on the basis of the output obtained when the text data 51 is input to the trained parameter estimation machine learning model 320 by, for example, the training processing unit 1305 (step S303).

Next, the operator causes the training processing unit 1305, for example, to train the parameter estimation machine learning model 320 on the basis of the diffusion generative model (noise removal machine learning model 310) with the parameters replaced by the processing of step S303, the text data 50 input to the text information conversion machine learning model 300, and the text data representing the opt-out target image (step S304).

The training processing unit 1305 updates the parameters 311 of the diffusion generative model (noise removal machine learning model 310) by using the parameters output by the parameter estimation machine learning model 320 thus trained. At this time, the training processing unit 1305 does not update, among the parameters 311 of the diffusion generative model, parameters other than the parameters selected in step S301.

Fig. 20 is an example of a flowchart for describing the parameter update processing according to the second embodiment. The flowchart of Fig. 20 depicts the processing in step S304 in the flowchart of Fig. 19.

In the second embodiment, as depicted in Fig. 20, the training processing unit 1305 executes first processing (step S310) and second processing (step S311) as the training processing of the parameter estimation machine learning model 320. The training processing unit 1305 integrates the results of the first processing and the second processing, and updates the parameters 311 of the diffusion generative model (step S312).

Fig. 21A and Fig. 21B are schematic diagrams for describing the parameter update processing according to the second embodiment. The first processing (step S310) and the second processing (step S311) described above will be described with reference to Fig. 21A and Fig. 21B.

Fig. 21A depicts an example of a case in which a similarity between the text data 50 (also described as text data A3 in the drawing) input to the text information conversion machine learning model 300 and the text data 51 (also described as text data B4 in the drawing) input to the parameter estimation machine learning model 321 is equal to or higher than a predetermined threshold for the first processing (step S310). The parameter estimation machine learning model 321 estimates the parameters 311 according to the input text data 51, and replaces the parameters selected in the noise removal machine learning model 310 with the estimated parameters 311.

For example, the training processing unit 1305 trains the parameter estimation machine learning model 321 so that the output image data 80 after noise removal and output from the noise removal machine learning model 310 on the basis of the input data 92 approaches image data A4 serving as the training data included in input data 91.

Note that whether the text data 50 and the text data 51 are similar to each other may be determined by applying the method described in, for example, NPL 3 "Alec Radford, et al., "Learning transferable visual models from natural language supervision", [online], Feb. 26, 2021 arXiv: 2103.00020, [retrieved on Nov. 15, 2023], Internet, <https://arxiv.org/abs/2103.00020". The threshold for the determination may be appropriately determined by the operator, for example.

Fig. 21B depicts an example of a case in which the similarity between the text data 50 (text data A3 in the drawing) input to the text information conversion machine learning model 300 and the text data 51 (text data B4 in the drawing) input to the parameter estimation machine learning model 321 is less than a predetermined threshold for the second processing (step S311). The parameter estimation machine learning model 321 estimates the parameters 311 according to the input text data 51, and replaces the parameters selected in the noise removal machine learning model 310 with the estimated parameters 311.

For example, the training processing unit 1305 trains the parameter estimation machine learning model 321 so that the output image data 80 after noise removal and output from the noise removal machine learning model 310 on the basis of the input data 92 separates from the image data A4 serving as the training data included in the input data 91.

The training processing unit 1305 uses the predetermined function in accordance with equation (1) described above as an objective function, and updates only the parameters of the trained parameter estimation machine learning model 321 trained by each of the first processing and the second processing described above so as to minimize the objective function.

Thus, in the second embodiment of the present disclosure, in a case in which predetermined training data included in a training dataset used for the training of a trained AI model is to be invalidated in accordance with an opt-out request for the AI model, the training data of the opt-out target can be invalidated simply by replacing parameters without performing retraining in the AI model. This makes it possible to execute processing according to an opt-out request for a trained AI model more quickly and easily.

### 3-3-3. System Configuration Examples Applicable to Second Embodiment

Next, examples of a system configuration applicable to the second embodiment will be described schematically.

### First System Configuration Example

For example, a case exists in which the information processing system 1004 depicted in Fig. 15 distributes application software including a generative model and receives an opt-out request from a rights holder of training data (image data, for example) included in the training dataset used to train the generative model. In this case, a configuration is conceivable in which the server 1600 creates a corrected version of the parameters 311 by using the parameter estimation machine learning model 320, and the created parameters 311 are delivered as a correction program from the server 1600 to the user terminal 1400 of the end user or the like.

As methods for replacing the parameters of the diffusion generative model (noise removal machine learning model 310) on the user terminal 1400 by using the corrected version of the parameters 311, a method performed on the server 1600 and a method performed on the user terminal 1400 are conceivable.

### Second System Configuration Example

A case exists in which an environment in which a generative model operates is set up on the server 1600, and the generative model is provided in a format that grants users access rights to the generative model. In this case, a configuration is conceivable in which, upon receiving an opt-out request from a rights holder of training data (image data, for example) included in the training dataset used to train the generative model, the server 1600 creates the corrected version of the parameters 311 by using the parameter estimation machine learning model 320 on the server 1600 and performs parameter replacement processing on the server 1600.

### Third System Configuration Example

A case exists in which parameters (weights) of a generative model are placed on a website separate from the server 1600, and users download these parameters to the user terminal 1400 to operate a generative model. In this case, a configuration is conceivable in which, upon receiving an opt-out request from a rights holder of training data (image data, for example) included in the training dataset used to train the generative model, the server 1600 publishes the corrected version of the parameters on the website. Further, in this case, the parameter replacement processing is conceivably executed by each user.

### 3-4. Modifications of Second Embodiment

Next, modifications of the second embodiment will be described.

The processing in step S204 in Fig. 19 can be replaced with "any training method that adjusts the parameters of the original generative model so that a specific image is not generated".

In the above description, the parameters of the noise removal machine learning model 310 are replaced with the parameters 311 estimated by the parameter estimation machine learning model 320, but the replacement is not limited to this example. For example, the parameters of the text information conversion machine learning model 300 may be replaced with the parameters estimated by the parameter estimation machine learning model 320.

Note that the effects described in the present specification are merely examples and are not limited, and other effects may be provided.

Note that the present technology may also adopt configurations such as described below.
(1) An information processing device including:
   a machine learning model obtained by incorporating parameters for performing inference,
   the information processing device being configured to incorporate, into the machine learning model, other parameters estimated by another machine learning model on the basis of training data to be invalidated with respect to a training dataset including training data used for training the machine learning model.
(2) The information processing device according to (1), wherein
   the parameters are replaced with the other parameters.
(3) The information processing device according to (1), wherein
   in the machine learning model, the other parameters are added in parallel to the parameters.
(4) The information processing device according to (1), wherein
   in the machine learning model, the other parameters are added in series to the parameters.
(5) The information processing device according to any one of (1) to (4), wherein
   the machine learning model is trained in advance to recognize a predetermined object contained in an image by using the training dataset,
   the information processing device being configured to incorporate, into the machine learning model, the other parameters learned by another machine learning model different from the machine learning model by using, as training data, an image misrecognized by the machine learning model with a predetermined probability or higher.
(6) The information processing device according to (5), the information processing device being configured to incorporate, into the machine learning model, the other parameters estimated by the other machine learning model trained by using, as the training data to be invalidated, an image not containing the predetermined object.
(7) The information processing device according to (6), the information processing device being configured to incorporate, into the machine learning model, the other parameters estimated by the other machine learning model trained so that
   a result of inference performed on the predetermined object by the machine learning model not incorporating the other parameters, and
   a result of inference performed on the predetermined object by the machine learning model incorporating the other parameters
   approach each other.
(8) The information processing device according to (6) or (7), the information processing device being configured to incorporate, into the machine learning model, the other parameters estimated by the other machine learning model trained so that
   a result of inference performed on an image not containing the predetermined object and different in class from the image not containing the predetermined object and used as the training data to be invalidated, by the machine learning model not incorporating the other parameters, and
   a result of inference performed on the image different in class by the machine learning model incorporating the other parameters
   approach each other.
(9) The information processing device according to any one of (6) to (8), the information processing device being configured to incorporate, into the machine learning model, the other parameters estimated by the other machine learning model trained so that, for a different image not containing the predetermined object and belonging to the same class as the image not containing the predetermined object and used as the training data to be invalidated, a probability that the different image belonging to the same class contains the predetermined object, obtained as a result of inference performed on the different image belonging to the same class by the machine learning model incorporating the other parameters, approaches zero.
(10) An information processing method executed by a processor, the information processing method including:
   incorporating, into a machine learning model, other parameters that are different from parameters incorporated into the machine learning model and that are estimated by another machine learning model on the basis of training data to be invalidated with respect to a training dataset including training data used for training the machine learning model.
(11) An information processing device including:
   a training unit configured to train, on the basis of first training data to be invalidated with respect to a training dataset, a first machine learning model configured to estimate first parameters in a machine learning model, wherein
   the training dataset includes second training data used for training for inference performed by a second machine learning model, and
   the training unit is configured to incorporate the first parameters into the second machine learning model.
(12) The information processing device according to (11), wherein
   the training unit is configured to replace second parameters in the second machine learning model with the first parameters.
(13) The information processing device according to (11), wherein
   the training unit is configured to add the first parameters in parallel to second parameters in the second machine learning model.
(14) The information processing device according to (11), wherein
   the training unit is configured to add the first parameters in series to second parameters in the second machine learning model.
(15) The information processing device according to any one of (11) to (14), wherein
   the second machine learning model is trained in advance to recognize a predetermined object contained in an image by using the training dataset, and
   the training unit is configured to train the first machine learning model by using, as the first training data, an image misrecognized by the second machine learning model with a predetermined probability or higher.
(16) The information processing device according to (15), wherein
   the training unit is configured to train the first machine learning model by using an image not containing the predetermined object as the first training data.
(17) The information processing device according to (16), wherein
   the training unit is configured to train the first machine learning model so that
   a result of inference performed on the predetermined object by the second machine learning model not incorporating the first parameters, and
   a result of inference performed on the predetermined object by the second machine learning model incorporating the first parameters
   approach each other.
(18) The information processing device according to (16) or (17), wherein
   the training unit is configured to train the first machine learning model so that
   a result of inference performed on an image not containing the predetermined object and different in class from the image not containing the predetermined object and used as the first training data, by the second machine learning model not incorporating the first parameters, and
   a result of inference performed on the image different in class by the second machine learning model incorporating the first parameters
   approach each other.
(19) The information processing device according to any one of (16) to (18), wherein
   the training unit is configured to train the first machine learning model so that, for a different image not containing the predetermined object and belonging to the same class as the image not containing the predetermined object and used as the first training data, a probability that the different image belonging to the same class contains the predetermined object, obtained as a result of inference performed on the different image belonging to the same class by the second machine learning model incorporating the first parameters, approaches zero.
(20) The information processing device according to (11), wherein
   the second machine learning model is trained in advance to generate a generated image corresponding to second text data on the basis of an input image by using the training dataset including the second training data,
   the training unit is configured to train the first machine learning model by using the first training data that is first text data corresponding to, among the second training data included in the training dataset, second training data to be invalidated or deleted.
(21) The information processing device according to (20), wherein
   the training unit is configured to train the first machine learning model so that a similarity of the generated image to the input image is reduced when a similarity between the first text data and the second text data is equal to or greater than a threshold.
(22) The information processing device according to (20) or (21), wherein
   the training unit is configured to train the first machine learning model so that a similarity between the generated image and the input image increases when a similarity between the first text data and the second text data is less than a threshold.
(23) An information processing method executed by a processor, the information processing method including:
   training, on the basis of first training data to be invalidated with respect to a training dataset, a first machine learning model configured to estimate first parameters in a machine learning model, wherein
   the training dataset includes second training data used for training for inference performed by a second machine learning model, and
   the training incorporates the first parameters into the second machine learning model.
(24) An information processing device including:
   a training unit configured to train, on the basis of first training data that is first text data corresponding to an opt-out target with respect to a training dataset, a first machine learning model configured to estimate first parameters in a machine learning model, wherein
   the training dataset includes second training data corresponding to second text data and used for training for generating, by a second machine learning model, a generated image in accordance with the second text data, and
   the training unit is configured to
   train the first machine learning model by using the first training data corresponding to, among the second training data included in the training dataset, second training data to be invalidated or deleted, and
   incorporate the first parameters into the second machine learning model.
(25) An information processing method executed by a processor, the information processing method including:
   training, on the basis of first training data that is first text data corresponding to an opt-out target with respect to a training dataset, a first machine learning model configured to estimate first parameters in a machine learning model, wherein
   the training dataset includes second training data corresponding to second text data and used for training for generating, by a second machine learning model, a generated image in accordance with the second text data, and
   the training is
   training the first machine learning model by using the first training data corresponding to, among the second training data included in the training dataset, second training data to be invalidated or deleted, and
   incorporating the first parameters into the second machine learning model.

### Reference Signs List

10, 11, 90 Input data
20, 20c Face recognition machine learning model
21, 311 Parameters
30, 31, 32, 33, 34, 35 Output data
40, 320, 321 Parameter estimation machine learning model
50, 51 Text data
60 Input image data
70, 80 Output image data
210 Original parameters
220 Additional parameters
300 Text information conversion machine learning model
310 Noise removal machine learning model
910 Training data
1000, 1004 Information processing system
1130 AI processing unit
1300, 1600 Server
1305 Training processing unit
1400 User terminal
1500 Rights holder terminal

## Claims

1. An information processing device comprising:
a machine learning model obtained by incorporating parameters for performing inference,
the information processing device being configured to incorporate, into the machine learning model, other parameters estimated by another machine learning model on the basis of training data to be invalidated with respect to a training dataset including training data used for training the machine learning model.

2. The information processing device according to claim 1, wherein
the parameters are replaced with the other parameters.

3. The information processing device according to claim 1, wherein
in the machine learning model, the other parameters are added in parallel to the parameters.

4. The information processing device according to claim 1, wherein
in the machine learning model, the other parameters are added in series to the parameters.

5. The information processing device according to claim 1, wherein
the machine learning model is trained in advance to recognize a predetermined object contained in an image by using the training dataset,
the information processing device being configured to incorporate, into the machine learning model, the other parameters learned by another machine learning model different from the machine learning model by using, as training data, an image misrecognized by the machine learning model with a predetermined probability or higher.

6. The information processing device according to claim 5, the information processing device being configured to incorporate, into the machine learning model, the other parameters estimated by the other machine learning model trained by using, as the training data to be invalidated, an image not containing the predetermined object.

7. The information processing device according to claim 6, the information processing device being configured to incorporate, into the machine learning model, the other parameters estimated by the other machine learning model trained so that
a result of inference performed on the predetermined object by the machine learning model not incorporating the other parameters, and
a result of inference performed on the predetermined object by the machine learning model incorporating the other parameters
approach each other.

8. The information processing device according to claim 6, the information processing device being configured to incorporate, into the machine learning model, the other parameters estimated by the other machine learning model trained so that
a result of inference performed on an image not containing the predetermined object and different in class from the image not containing the predetermined object and used as the training data to be invalidated, by the machine learning model not incorporating the other parameters, and
a result of inference performed on the image different in class by the machine learning model incorporating the other parameters
approach each other.

9. The information processing device according to claim 6, the information processing device being configured to incorporate, into the machine learning model, the other parameters estimated by the other machine learning model trained so that, for a different image not containing the predetermined object and belonging to the same class as the image not containing the predetermined object and used as the training data to be invalidated, a probability that the different image belonging to the same class contains the predetermined object, obtained as a result of inference performed on the different image belonging to the same class by the machine learning model incorporating the other parameters, approaches zero.

10. An information processing method executed by a processor, the information processing method comprising:
incorporating, into a machine learning model, other parameters that are different from parameters incorporated into the machine learning model and that are estimated by another machine learning model on the basis of training data to be invalidated with respect to a training dataset including training data used for training the machine learning model.

11. An information processing device comprising:
a training unit configured to train, on the basis of first training data to be invalidated with respect to a training dataset, a first machine learning model configured to estimate first parameters in a machine learning model, wherein
the training dataset includes second training data used for training for inference performed by a second machine learning model, and
the training unit is configured to incorporate the first parameters into the second machine learning model.

12. The information processing device according to claim 11, wherein
the training unit is configured to replace second parameters in the second machine learning model with the first parameters.

13. The information processing device according to claim 11, wherein
the training unit is configured to add the first parameters in parallel to second parameters in the second machine learning model.

14. The information processing device according to claim 11, wherein
the training unit is configured to add the first parameters in series to second parameters in the second machine learning model.

15. The information processing device according to claim 11, wherein
the second machine learning model is trained in advance to recognize a predetermined object contained in an image by using the training dataset, and
the training unit is configured to train the first machine learning model by using, as the first training data, an image misrecognized by the second machine learning model with a predetermined probability or higher.

16. The information processing device according to claim 15, wherein
the training unit is configured to train the first machine learning model by using an image not containing the predetermined object as the first training data.

17. The information processing device according to claim 16, wherein
the training unit is configured to train the first machine learning model so that
a result of inference performed on the predetermined object by the second machine learning model not incorporating the first parameters, and
a result of inference performed on the predetermined object by the second machine learning model incorporating the first parameters
approach each other.

18. The information processing device according to claim 16, wherein
the training unit is configured to train the first machine learning model so that
a result of inference performed on an image not containing the predetermined object and different in class from the image not containing the predetermined object and used as the first training data, by the second machine learning model not incorporating the first parameters, and
a result of inference performed on the image different in class by the second machine learning model incorporating the first parameters
approach each other.

19. The information processing device according to claim 16, wherein
the training unit is configured to train the first machine learning model so that, for a different image not containing the predetermined object and belonging to the same class as the image not containing the predetermined object and used as the first training data, a probability that the different image belonging to the same class contains the predetermined object, obtained as a result of inference performed on the different image belonging to the same class by the second machine learning model incorporating the first parameters, approaches zero.

20. The information processing device according to claim 11, wherein
the second machine learning model is trained in advance to generate a generated image corresponding to second text data on the basis of an input image by using the training dataset including the second training data, and
the training unit is configured to train the first machine learning model by using the first training data that is first text data corresponding to, among the second training data included in the training dataset, second training data to be invalidated or deleted.

21. The information processing device according to claim 20, wherein
the training unit is configured to train the first machine learning model so that a similarity of the generated image to the input image is reduced when a similarity between the first text data and the second text data is equal to or greater than a threshold.

22. The information processing device according to claim 20, wherein
the training unit is configured to train the first machine learning model so that a similarity between the generated image and the input image increases when a similarity between the first text data and the second text data is less than a threshold.

23. An information processing method executed by a processor, the information processing method comprising:
training, on the basis of first training data to be invalidated with respect to a training dataset, a first machine learning model configured to estimate first parameters in a machine learning model, wherein
the training dataset includes second training data used for training for inference performed by a second machine learning model, and
the training incorporates the first parameters into the second machine learning model.

24. An information processing device comprising:
a training unit configured to train, on the basis of first training data that is first text data corresponding to an opt-out target with respect to a training dataset, a first machine learning model configured to estimate first parameters in a machine learning model, wherein
the training dataset includes second training data corresponding to second text data and used for training for generating, by a second machine learning model, a generated image in accordance with the second text data, and
the training unit is configured to
train the first machine learning model by using the first training data corresponding to, among the second training data included in the training dataset, second training data to be invalidated or deleted, and
incorporate the first parameters into the second machine learning model.

25. An information processing method executed by a processor, the information processing method comprising:
training, on the basis of first training data that is first text data corresponding to an opt-out target with respect to a training dataset, a first machine learning model configured to estimate first parameters in a machine learning model, wherein
the training dataset includes second training data corresponding to second text data and used for training for generating, by a second machine learning model, a generated image in accordance with the second text data, and
the training is
training the first machine learning model by using the first training data corresponding to, among the second training data included in the training dataset, second training data to be invalidated or deleted, and
incorporating the first parameters into the second machine learning model.
